# DEMANDE DE BREVET EUROPEEN

(11) **EP 4 390 847 A1**
(43) Date de publication de la demande: **26.06.2024**
(21) Numéro de dépôt: 23205019.5
(22) Date de dépôt: 20.10.2023
(51) Int. Cl.: G06T 7/20

(54) **PROCEDE ET DISPOSITIF DE PRISE DE VUE D'UNE ZONE D'INTERET D'UN SUJET EN MOUVEMENT**

(30) Priorité: 23.12.2022 FR 2214381
(71) Demandeur: IDEMIA Identity & Security France, 92400 Courbevoie (FR)
(72) Inventeur: AIT BOUHOU, Rahma, 92400 Courbevoie (FR); SIWEK, Jean-Francois, 92400 Courbevoie (FR); NICOLAS, Jonathan, 92400 Courbevoie (FR); NGUYEN, Dorian, 92400 Courbevoie (FR)
(74) Mandataire: Idemia

(57) **Abrégé**

La présente invention concerne un procédé de capture d'images d'une zone d'intérêt d'un sujet en mouvement au sein d'un volume de capture caractérisé en ce que la capture de l'image à un instant t est faite en fonction d'une estimation de la position de la zone d'intérêt calculée à partir de positions passées calculées. La profondeur de champ est calculée à partir de cette estimation modifiée d'un facteur de profondeur de champ.

## Description

La présente invention concerne le domaine de la prise de vue d'une zone d'intérêt localisée sur un sujet en mouvement. Plus particulièrement, l'invention s'intéresse au suivi et à l'obtention d'une prise de vue nette de la zone d'intérêt localisée sur le sujet en mouvement.

Il peut s'agir, dans un premier exemple, de reconnaître les iris d'une personne évoluant devant le système de capture. Dans un second exemple, il peut également s'agir de lire un code QR apposé sur un objet, pendant la manipulation de ce dernier. D'autres exemples de contextes techniques peuvent bénéficier de l'invention.

Il existe des systèmes permettant la capture de la zone d'intérêt lorsque le sujet est fixe. Le volume de capture est la zone de l'espace considérée pour la capture de l'image de la zone d'intérêt. C'est la zone dans laquelle le sujet peut évoluer en permettant la capture de la zone. Si le sujet sort du volume de capture, il n'est pas considéré par le système de capture.

Lorsque le sujet est fixe, le système de capture peut fonctionner sur le principe suivant. Dans une première étape, le sujet est détecté et localisé au sein du volume de capture. Ensuite, le système de capture attend la stabilisation du sujet. Lorsque le sujet est stable, une étape précise de localisation de la zone d'intérêt permet d'en obtenir les coordonnées en trois dimensions. Ces coordonnées permettent alors de positionner la caméra de capture, équipée de moteurs permettant son orientation, dans la direction précise de la zone d'intérêt visée. Une série d'images est alors capturée jusqu'à obtention de la qualité suffisante pour l'application, typiquement la reconnaissance de l'iris ou la lecture du code QR. Il est à noter que les applications envisagées nécessitent la capture d'une image de bonne résolution, que ce soit pour la reconnaissance des iris ou la lecture du code QR.

Lorsque le sujet est en mouvement, la capture d'images nettes de la zone d'intérêt se complique. En effet, le mouvement du sujet peut générer des images floues. De plus, du fait de la résolution et de la sensibilité nécessaire, les images capturées présentent une très faible profondeur de champs. Une imprécision sur la distance de la zone d'intérêt produit alors également la capture d'une image floue.

L'invention vise à résoudre ce problème en proposant une méthode de capture d'images d'une zone d'intérêt portée par un sujet en mouvement qui produise rapidement et de manière fiable au moins une image nette de la zone d'intérêt visée.

Selon un aspect de l'invention, il est proposé un procédé de capture d'images d'une zone d'intérêt d'un sujet en mouvement au sein d'un volume de capture caractérisé en ce que le procédé comporte les étapes suivantes :
- calcul répété à une première fréquence de la position en trois dimensions de la zone d'intérêt dans le volume de capture par capture du volume de capture par un système de caméra de contexte, et détection et localisation de la zone d'intérêt dans le volume de capture ;
- estimation à une fréquence, identique ou différente de la première fréquence, d'une trajectoire en trois dimensions de la zone d'intérêt dans le volume de capture à partir des positions calculées ;
- capture d'une série d'images de la zone d'intérêt par une caméra de capture à une seconde fréquence par estimation d'une position de la zone d'intérêt à au moins un instant t futur à partir de la trajectoire estimée en trois dimensions de la zone d'intérêt, pointage de la caméra de capture dans la direction de la position estimée de la zone d'intérêt à l'instant t, réglage de la mise au point de la caméra de capture sur la distance entre la caméra de capture et la position estimée de la zone d'intérêt à l'instant t additionnée d'un facteur de mise au point variant dans un intervalle centré sur zéro, et capture d'une image par la caméra de capture à l'instant t.

Dans un mode de réalisation, le système de caméra de contexte comporte deux caméras produisant des images stéréoscopiques.

Dans un mode de réalisation, le système de caméra de contexte comporte une caméra en temps de vol.

Dans un mode de réalisation, le facteur de mise au point évolue linéairement entre les valeurs extrêmes de l'intervalle centré sur zéro.

Dans un mode de réalisation, le facteur de mise au point évolue de manière sinusoïdale entre les valeurs extrêmes de l'intervalle centré sur zéro.

Dans un mode de réalisation, le facteur de mise au point évolue avec un pas d'incrément correspondant à la profondeur de champ entre les valeurs extrêmes de l'intervalle centré sur zéro.

Dans un mode de réalisation, la trajectoire en trois dimensions de la zone d'intérêt est estimée linéairement à partir des deux dernières positions calculées.

Dans un mode de réalisation, la trajectoire en trois dimensions de la zone d'intérêt est estimée à une fréquence supérieure à la première fréquence.

Selon un autre aspect de l'invention, il est proposé un programme d'ordinateur comprenant des instructions adaptées à la mise en oeuvre de chacune des étapes du procédé selon l'invention lorsque ledit programme est exécuté sur un ordinateur.

Selon un autre aspect de l'invention, il est proposé un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'invention.

Selon un autre aspect de l'invention, il est proposé un dispositif de capture d'images d'une zone d'intérêt d'un sujet en mouvement au sein d'un volume de capture caractérisé en ce que le dispositif comporte un processeur configuré pour les étapes suivantes :
- calcul répété à une première fréquence de la position en trois dimensions de la zone d'intérêt dans le volume de capture par capture du volume de capture par un système de caméra de contexte, et détection et localisation de la zone d'intérêt dans le volume de capture ;
- estimation à une fréquence, identique ou différente de la première fréquence, d'une trajectoire en trois dimensions de la zone d'intérêt dans le volume de capture à partir des positions calculées ;
- capture d'une série d'images de la zone d'intérêt par une caméra de capture à une seconde fréquence par estimation d'une position de la zone d'intérêt à au moins un instant t futur à partir de la trajectoire estimée en trois dimensions de la zone d'intérêt, pointage de la caméra de capture dans la direction de la position estimée de la zone d'intérêt à l'instant t, réglage de la mise au point de la caméra de capture sur la distance entre la caméra de capture et la position estimée de la zone d'intérêt à l'instant t additionnée d'un facteur de mise au point variant dans un intervalle centré sur zéro, et capture d'une image par la caméra de capture à l'instant t.

Aux dessins annexés, donnés à titre d'exemples non limitatifs :
la figure 1 représente, selon un schéma de principe, une architecture du système de capture selon un mode de réalisation de l'invention ;
la figure 2 représente, selon une vue schématique en trois dimensions, une architecture matérielle d'un système de capture selon un exemple de réalisation de l'invention ;
la figure 3 représente, une architecture logicielle de l'estimation et du suivi de trajectoire dans un exemple de réalisation de l'invention ;
la figure 4 illustre le principe de l'estimation de position dans un exemple de réalisation de l'invention ;
la figure 5 illustre la capture des images de la zone d'intérêt à partir des positions estimées dans un mode de réalisation de l'invention ;
la figure 6 est un bloc-diagramme schématique d'un dispositif de traitement de l'information pour la mise en oeuvre d'un ou plusieurs modes de réalisation de l'invention.

L'invention peut s'appliquer dans différents contextes. L'exemple de réalisation se place dans le contexte de la reconnaissance des iris d'une personne en mouvement évoluant devant une caméra de capture. La personne peut, par exemple, traverser un sas de sécurité dans un aéroport, où simplement évoluer dans un espace libre et être suivie par le système de capture. Un autre exemple de réalisation de l'invention concerne la capture d'un code QR (*QR-code* en anglais) posé sur un objet qui est déplacé. Il s'agit alors de capturer le code de l'objet pendant sa manipulation, typiquement dans un entrepôt. Dans tous les cas, il s'agit de capturer une image nette d'une zone d'intérêt localisée sur un sujet en mouvement.

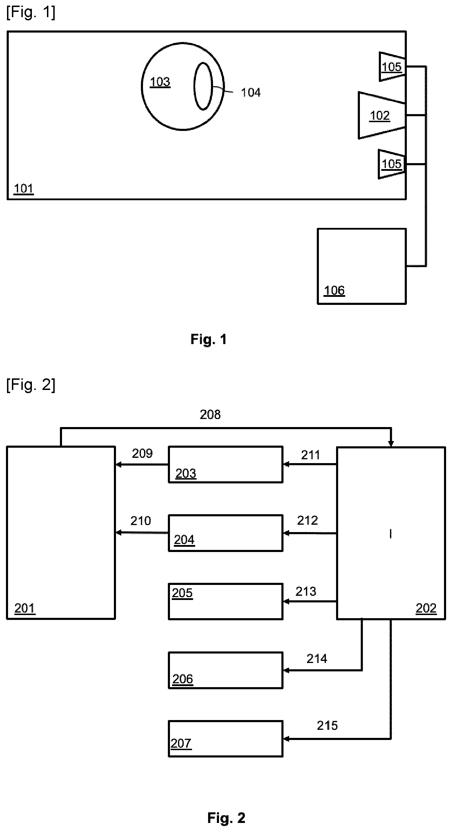

La Figure 1 illustre l'architecture du système de capture selon un mode de réalisation de l'invention. Cette figure illustre le volume de capture 101 équipé d'une caméra de capture 102. Cette caméra de capture permet avantageusement de suivre un sujet 103 porteur d'une zone d'intérêt 104. Pour ce faire, la caméra de capture 102 est typiquement motorisée pour permettre son orientation dans l'espace. Dans l'exemple de réalisation, elle est dotée de deux moteurs permettant l'un une rotation dans le plan horizontal et l'autre dans le plan vertical. Le mouvement de ces deux moteurs permet de pointer la caméra de capture dans n'importe quelle direction au sein du volume de capture. Un troisième moteur permet de régler la mise au point de la caméra de capture, c'est-à-dire d'adapter la prise de vue à la distance du sujet, et plus particulièrement à la distance de la zone d'intérêt portée par le sujet. La distance est ici la distance à la caméra, on parle également de profondeur.

Le système de capture est contrôlé par un dispositif de traitement de l'information 106 qui permet de commander les mouvements de ces moteurs. Typiquement, mais pas obligatoirement, c'est également ce dispositif de traitement de l'information 106 qui reçoit et traite les images reçues de la caméra de capture 102. Le dispositif de traitement de l'information est typiquement un ordinateur, une tablette, un téléphone intelligent (*smartphone* en anglais) ou tout autre dispositif permettant l'exécution d'un programme informatique en charge du contrôle de la caméra, de l'acquisition des images et des différentes étapes du procédé selon l'invention.

Avantageusement, dans le mode de réalisation de référence, la caméra de capture 102 est complétée par une ou plusieurs caméras de contexte 105. Ces caméras de contexte permettent de capturer l'ensemble du volume de capture et de reconnaître le sujet, de l'identifier et de le localiser, puis de localiser la zone d'intérêt 104. Selon les modes de réalisation, les caméras de contexte 105 sont également contrôlées par le dispositif de traitement de l'information 106. Alternativement, un dispositif dédié peut être chargé du contrôle des caméras de contexte. Dans ce cas, ce dispositif communique avec le dispositif 106 pour réaliser la capture. Dans certains modes de réalisation, la ou les caméras de contexte peuvent être complétées ou remplacées par des capteurs annexes contribuant à la localisation du sujet, comme, par exemple un capteur de temps de vol (ToF pour *Time of Fly* en anglais), un radar ou tout autre capteur. Ces caméras de contexte et leurs éventuels capteurs annexes permettent de calculer la position du sujet et plus particulièrement de la zone d'intérêt du sujet dans l'espace en trois dimensions constitué par le volume de capture. En l'absence de capteurs annexes, la distance du sujet peut être calculée par triangulation en utilisant au moins deux caméras de contexte.

Cette estimation de la position de la zone d'intérêt est utilisée pour le contrôle du positionnement et le réglage de la prise de vue de la caméra de capture. Toutefois, l'acquisition des images des caméras de contexte, leur analyse pour produire le positionnement en trois dimensions de la zone d'intérêt, le calcul des commandes de moteurs permettant de positionner la caméra de capture sur la position calculée et l'acquisition des images par la caméra de capture prend un certain temps. Le système de capture est donc soumis à des latences entre le calcul de la position et la capture des images de la zone d'intérêt. Du fait du mouvement continu du sujet, de ces latences et d'une imprécision inhérente au calcul de positionnement, l'obtention d'une image de capture nette de la zone d'intérêt est une difficulté.

Dans ce document, il est proposé de piloter la caméra de capture en fonction, non pas du calcul de la position de la zone d'intérêt faite par les caméras de contexte, mais d'une estimation de cette position au moment de la capture effective de cette zone d'intérêt par la caméra de capture. Cette estimation de la position est donc une estimation d'une position future de la zone d'intérêt au moment de son estimation. Elle est faite à partir des positions effectives calculées qui permettent d'estimer la trajectoire du sujet et donc d'obtenir une estimation de la position dans le futur, au moment où la caméra de capture va procéder à la capture de l'image.

Avantageusement, la position en trois dimensions de cette estimation de position est modifiée par un facteur de mise au point dans la dimension représentant la distance à la caméra de capture de la zone d'intérêt. Ce facteur de mise au point représente l'ajout d'une valeur évoluant linéairement entre un minimum négatif et un maximum positif autour de la valeur nulle et change entre chaque prise de vue. Le fait de jouer légèrement ainsi sur la mise au point des captures d'image permet d'augmenter les chances d'obtenir au moins une image nette sur un ensemble de captures.

Avantageusement, les moteurs dont est dotée la caméra de capture sont du type sans balais (*brushless* en anglais), notamment en prise directe, qui permettent un mouvement continu du moteur. Ce type de moteurs sans balais permet un suivi fluide et en continu par la caméra de capture des mouvements du sujet sans nuire aux prises de vue. Lorsque les moteurs sont en prise directe, l'absence de réducteur propre à ces moteurs élimine les jeux de fonctionnement afférents. Cela ne serait pas possible avec des moteurs pas à pas pilotés selon une méthode de pilotage pas à pas parfois utilisés dans des systèmes connus.

La Figure 2 illustre l'architecture matérielle d'un système de capture selon un exemple de réalisation de l'invention. Le système est principalement contrôlé par le processeur principal 201. Ce processeur est typiquement opéré par un système d'exploitation classique tel que Linux (RTM), Windows (RTM) ou MacOs (RTM). Ces systèmes d'exploitation ne sont pas strictement temps réel, ce qui peut affecter la précision des estimations et devra être pris en compte.

Le système dispose également d'un coprocesseur 202, dont la caractéristique principale est d'être temps réel, c'est-à-dire d'être capable d'exécuter certaines tâches à des instants précis prédéterminés, et ce de manière garantie. Le coprocesseur temps réel 202 est en charge du déclenchement 211 des caméras de contexte 203, du déclenchement 212 de la caméra de capture 204, de la commande 213 du moteur de mise au point 205 de la caméra de capture, de la commande 214 des moteurs de visée 206 qui permettent l'orientation de la caméra de capture, et finalement de la commande 215 de l'illumination 207 de la zone d'intérêt de manière synchronisée avec les prises de vue de la caméra de capture. Les images 209 issues des caméras de contexte 203 et les images 210 issues de la caméra de capture 204 sont transmises pour traitement au processeur principal 201.

Le coprocesseur temps réel 202 est responsable des tâches temps réel. Il déclenche la prise des images des caméras contextes à intervalle régulier, par exemple à une fréquence de 15 Hz. Il pilote les déplacements des moteurs de visée, par exemple avec un asservissement en position et/ou vitesse. Il pilote les déplacements du moteur de mise au point. Il déclenche la prise d'image sur la caméra de capture au moment opportun, et il active l'illumination de la zone d'intérêt de manière synchrone avec la prise de vue de la caméra de capture.

Le processeur principal 201 reçoit un flux d'images contextes. Sur ces images contextes il détecte la présence du sujet et dans ce cas il localise la zone d'intérêt dans le volume de capture en trois dimensions. Sur la base de ces coordonnées en trois dimensions, le processeur principal estime la trajectoire de la zone d'intérêt, puis envoie la description de cette trajectoire au coprocesseur 202.

Le coprocesseur 202 asservit les moteurs de visée 206 en position et vitesse, de manière à rejoindre le plus tôt possible la trajectoire qui lui a été envoyée par le processeur principal 201.

Lorsque les moteurs de visée ont "accroché" la trajectoire idéale, le coprocesseur 202 déclenche la prise d'image de la zone d'intérêt de manière périodique.

Plus le coprocesseur 202 reçoit des mises à jour de trajectoire souvent, plus il s'approchera de la trajectoire réelle de la zone d'intérêt.

L'avantage de la synchronisation entre le processeur principal et le coprocesseur, est que l'envoi des commandes par le processeur principal n'a pas de contrainte temps réel, ce qui permet d'utiliser un système d'exploitation multi-tâches non temps réel. Dans d'autres modes de réalisation alternatifs, un unique processeur temps réel prend en charge l'intégralité des tâches ici partagées entre le processeur central et le coprocesseur temps réel.

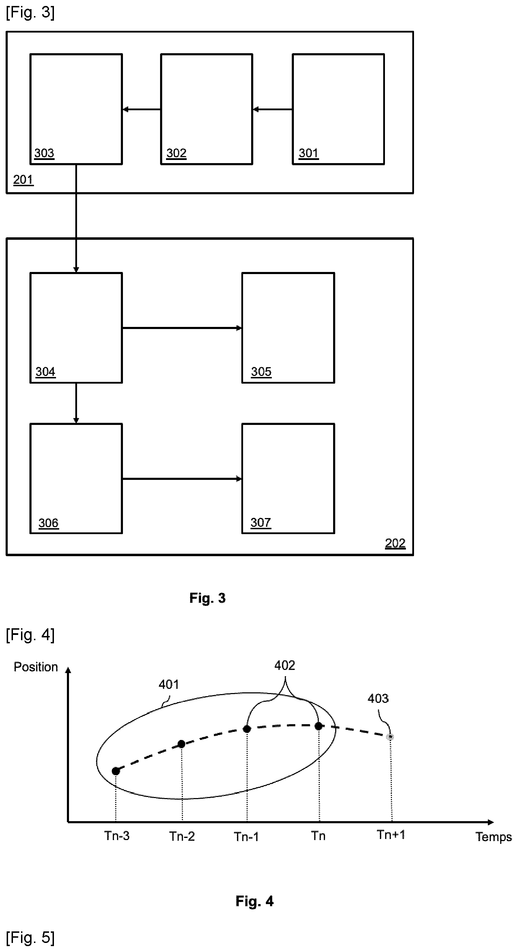

La Figure 3 illustre l'architecture logicielle de l'estimation et du suivi de trajectoire dans un exemple de réalisation de l'invention.

L'exemple de réalisation est basé sur l'utilisation de deux caméras de contexte utilisées en mode stéréoscopique pour permettre une localisation en trois dimensions d'objets détectés sur l'image. Il est rappelé ici, que d'autres modes de réalisation peuvent utiliser d'autres techniques, alternatives ou en complément de la visualisation stéréoscopique, comme les caméras temps de vol, ou encore un système de vision en trois dimensions par lumière structurée.

Le processeur principal 201 exécute un premier module 301 en charge de la localisation de la zone d'intérêt, par exemple les yeux du sujet dans le cas d'une reconnaissance d'iris au sein des images de contexte. L'algorithme de reconnaissance et de localisation utilisé est considéré comme connu et n'est pas le sujet de ce document.

Un second module 302 exécuté par le processeur principal 201 est chargé du calcul de la position en trois dimensions de la zone d'intérêt localisée par le premier module. Ces positions sont mémorisées, au moins les dernières positions. Le nombre de positions mémorisées va dépendre de l'algorithme utilisé pour estimer la trajectoire, il est au minimum de deux positions.

Un troisième module 303 exécuté par le processeur principal 201 est chargé de l'estimation de la trajectoire de la zone d'intérêt. Cette estimation est typiquement faite par approximation linéaire des positions mémorisées. Le mode de réalisation le plus simple se contente d'estimer les coordonnées d'une droite passant par les deux dernières positions mémorisées. Dans ce cas, on estime une trajectoire localement rectiligne, ce qui peut être suffisant. Dans des modes de réalisation plus complexe, il est possible de calculer une modélisation polynomiale de la trajectoire basée sur un nombre de positions supérieur à deux. Une telle modélisation polynomiale permet de d'obtenir une estimation de trajectoire plus précise que la trajectoire localement rectiligne.

La trajectoire est estimée en fonction du temps. Pour ce faire, les images de contexte reçues sont marquées temporellement d'une étiquette temporelle (*timestamp* en anglais) lors de leur réception. Ces étiquettes temporelles permettent d'associer un index temporel n aux positions calculées en trois dimensions. A l'index temporel n, correspondant à un instant t, correspond donc la position en trois dimensions *Pₙ* = (*Xₙ*,*Yₙ*,*Zₙ*). On obtient ainsi une série de positions indexées *Pᵢ*. Il est alors également possible de calculer une vitesse associée à cette position dès lors que l'on a mémorisé au moins deux positions. Cette série peut comporter des index pour lesquels il n'y a pas de positions associées. Ceci peut être dû à un problème de transmission d'images contexte, à une impossibilité de reconnaître la zone d'intérêt dans certaines images contexte par exemple. Ces positions manquantes doivent être prise en compte lors de l'estimation de la trajectoire, notamment pour l'estimation de la vitesse.

Par exemple, pour une estimation de trajectoire localement rectiligne sur la base de deux positions mémorisées *P*_{*n* - 1} = (*X*_{*n* - 1},*Y*_{*n* - 1},*Z*_{*n* - 1}), et *Pₙ* = (*Xₙ*,*Yₙ*,*Zₙ*), il est possible d'estimer la vitesse du sujet à l'instant *t* correspondant à l'index temporel *n : Vₙ* = (*VXₙ*, *VYₙ*, *VZₙ*) = (*Xₙ - X*_{*n* - 1},*Yₙ* - *Y*_{*n* - 1},*Zₙ - Z*_{*n* - 1}). Si la position *P*_{*n -* 1} manque, il est possible d'utiliser de manière similaire la position *P*_{*n* - 2}, il faut alors diviser la vitesse obtenue par deux pour tenir compte de la position manquante. Il est alors possible d'estimer une position à un temps *T* supérieur au temps courant *t*, à partir de la position courante à l'instant *t* en appliquant la vitesse sur un temps (*T* - *t*).

Le module 303 d'estimation de la trajectoire transmet les estimations successives à un module 304 de suivi de trajectoire exécuté par le coprocesseur temps réel 202. Ce module de suivi de trajectoire est en charge d'estimer la position de la zone d'intérêt, à tout instant, sur la base de la dernière estimation de trajectoire transmise par le module 303. Dans la pratique, la fréquence de transmission des estimations successives est généralement supérieure à la fréquence de capture des images de contexte. Par exemple, les estimations de trajectoire sont transmises à une fréquence de 1 kHz dans un exemple de réalisation de l'invention.

Cette connaissance d'une estimation de la position de la zone d'intérêt à tout instant permet de piloter le module 305 de contrôle des moteurs de visée. C'est ainsi que la caméra de capture 204 réalise un suivi continu de la zone d'intérêt.

Un module 306 reçoit également l'estimation de la position de la zone d'intérêt. Ce module est chargé de calculer un facteur de mise au point qui est ajouté à la position en Z, c'est-à-dire à la distance entre la caméra de capture et la zone d'intérêt. Ce facteur de mise au point évolue, par exemple, de manière linéaire entre un minimum négatif et un maximum positif. La distance entre la caméra de capture et l'estimation de la position de la zone d'intérêt, corrigée du facteur de mise au point, permet la commande du module 307 qui contrôle le moteur de mise au point de la caméra de capture.

La Figure 4 illustre le principe de l'estimation de position dans un exemple de réalisation de l'invention. L'axe vertical représente la position de la zone d'intérêt, tandis que l'axe horizontal représente le temps. La position est représentée schématiquement par une valeur sur l'axe vertical, elle est en réalité composée des trois composantes donnant la position en trois dimensions de la zone d'intérêt. Les positions dans la zone 401 représentent les positions calculées de la zone d'intérêt à partir des images de contexte aux temps *T*_{*n -* 3}, *T*_{*n -* 2}, *T*_{*n* - 1}, *Tₙ,* ces positions connues sont utilisées pour calculer l'estimée de la position 403 au temps *T*_{*n* + 1}. Cette estimation est typiquement obtenue par modélisation linéaire de la trajectoire à partir des positions connues 401. Pour obtenir une estimation de trajectoire fiable, il est nécessaire d'échantillonner le calcul des positions à une fréquence suffisante. Cette fréquence va dépendre de la vitesse d'évolution du sujet et donc dépendre de l'application envisagée. Par exemple, dans le cas de la reconnaissance des iris d'une personne se déplaçant en marchant, une fréquence de 15 images de contexte et donc de 15 estimées de positions calculées par seconde s'est révélée suffisante.

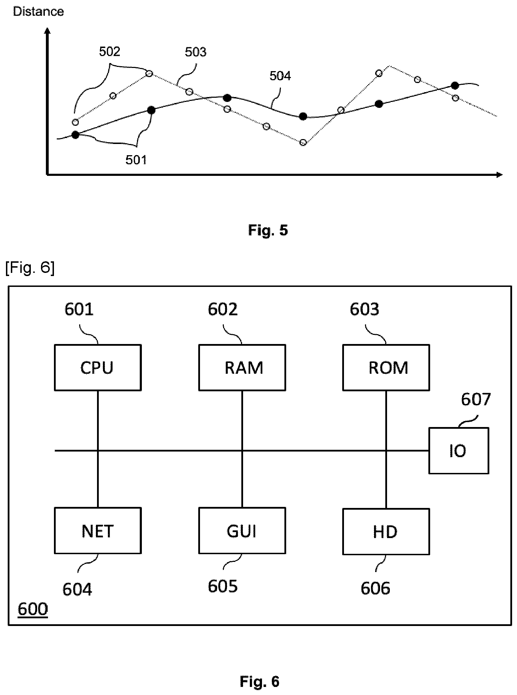

La Figure 5 illustre la capture des images de la zone d'intérêt à partir des positions estimées dans un mode de réalisation de l'invention. Sur cette figure, l'axe vertical représente la composante Z de la position, c'est-à-dire la distance entre la caméra de capture et la zone d'intérêt. L'axe horizontal représente toujours le temps. La courbe 504 représente la trajectoire estimée de la zone d'intérêt. Les points 501 sur cette courbe 504 représentent les différentes valeurs de la composante en Z des estimations de position correspondant donc aux points 403 de la Figure 4.

Comme déjà décrit, ces positions 501 ne sont que des estimations et sont donc sujettes à une certaine imprécision. Cette imprécision et le besoin d'obtenir une image nette en haute résolution de la zone d'intérêt, image qui possède une faible profondeur de champ, font que les images obtenues directement à partir des estimations de position sont souvent floues. Pour contrer cette imprécision, il est proposé d'ajouter le facteur de mise au point *δ_{Z}* à la composante en Z de la position estimée de la zone d'intérêt. Ce facteur de mise au point est variable d'une prise de vue à la suivante. Par exemple, on fait varier le facteur de mise au point *δ_{Z}* dans un intervalle [ -Δ*_{Z}*,Δ*_{Z}*] centré sur la valeur nulle, ce qui permet de compenser des erreurs qui ont statistiquement une valeur moyenne nulle. La valeur maximum du facteur de mise au point Δ*_{Z}* dépend de l'imprécision du système comprenant les caméras de contexte et le calcul de l'estimation de la position. Le pas de variation du facteur de mise au point doit être inférieur à la profondeur de champ des images capturées par la caméra de capture. Plus l'estimation est précise et plus la valeur maximum du facteur de mise au point peut être faible. Dans un exemple de réalisation, le pas de variation du facteur de mise au point est de l'ordre du centimètre, tandis que la valeur maximum du facteur de mise au point est comprise entre sept et dix centimètres. Statistiquement, sur l'ensemble des prises de vue de la caméra de capture, pour certaines de ces images, le facteur de mise au point compense l'imprécision de l'estimation de la distance de la caméra à la zone d'intérêt, et permet d'obtenir une image nette.

Selon les modes de réalisation, plusieurs manières de faire varier le facteur de mise au point dans l'intervalle [ -Δ*_{Z}*,Δ*_{Z}*] peuvent être utilisées. Une première alternative consiste à faire varier le facteur de mise au point linéairement entre -Δ*_{Z}* et Δ*_{Z}*, selon un profil en dent de scie. Une seconde alternative prévoie une évolution sinusoïdale du facteur de mise au point dans l'intervalle. Selon une troisième alternative, le facteur de mise au point est choisi aléatoirement dans l'intervalle à chaque prise de vue. Selon une quatrième alternative, le facteur de mise au point varie de telle sorte que deux facteurs consécutifs sont espacés d'une valeur correspondant à la profondeur de champ de la caméra.

La courbe 503 représente les prises de vue de la caméra de capture. La hauteur des points représente la distance de mise au point utilisée lors de la prise de vue, c'est-à-dire, l'estimation en Z de la position corrigée du facteur de mise au point. La fréquence des prises de vue de la caméra de capture n'est pas nécessairement identique à la fréquence des calculs de position, et donc de prise de vue par les caméras de contexte. En effet, la trajectoire estimée permet de calculer une estimation de position à tout instant et donc de choisir arbitrairement l'instant de prise de vue. Plus la fréquence de prise de vue est élevée et plus rapidement une image nette et exploitable de la zone d'intérêt est obtenue. La limite de la fréquence de prise de vue est déterminée par le temps nécessaire pour régler la mise au point de la caméra de capture à la nouvelle valeur et par le temps nécessaire pour capturer l'image. Dans la pratique, pour l'application de capture des images d'iris, une fréquence de prise de vue de 30 images par seconde donne de bons résultats.

La figure 6 est un bloc-diagramme schématique d'un dispositif de traitement de l'information 600 pour la mise en oeuvre d'un ou plusieurs modes de réalisation de l'invention. Ce dispositif correspond typiquement au dispositif 160 de la figure 1. Le dispositif 600 de traitement de l'information peut être un périphérique tel qu'un micro-ordinateur, un poste de travail ou un terminal mobile de télécommunication. Le dispositif 600 comporte un bus de communication connecté à:
- une unité centrale de traitement 601, tel qu'un microprocesseur, notée CPU;
- une mémoire à accès aléatoire 602, notée RAM, pour mémoriser le code exécutable du procédé de réalisation de l'invention ainsi que les registres adaptés à enregistrer des variables et des paramètres nécessaires pour la mise en oeuvre du procédé selon des modes de réalisation de l'invention ; la capacité de mémoire du dispositif peut être complétée par une mémoire RAM optionnelle connectée à un port d'extension, par exemple;
- une mémoire morte 603, notée ROM, pour stocker des programmes informatiques pour la mise en oeuvre des modes de réalisation de l'invention;
- une interface réseau 604, notée NET, est normalement connectée à un réseau de communication sur lequel des données numériques à traiter sont transmis ou reçus. L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 601 ;
- une interface utilisateur 605 pour recevoir des entrées d'un utilisateur ou pour afficher des informations à un utilisateur ;
- un dispositif de stockage 606 tel que décrit dans l'invention et noté HD ;
- un module d'entrée/sortie 607 pour la réception / l'envoi de données depuis / vers des périphériques externes tels que disque dur, support de stockage amovible ou autres.

Le code exécutable peut être stocké dans une mémoire non volatile 603, par exemple une mémoire flash ou une mémoire morte, sur le dispositif de stockage 606 ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif de communication 600, tel que le dispositif de stockage 606, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 601 est capable d'exécuter des instructions de la mémoire RAM principale 602, relatives à une application logicielle. Un tel logiciel, lorsqu'il est exécuté par le processeur 601, provoque l'exécution des procédés décrits.

Dans ce mode de réalisation, l'appareil est un appareil programmable qui utilise un logiciel pour mettre en oeuvre l'invention. Toutefois, à titre subsidiaire, la présente invention peut être mise en oeuvre dans le matériel (par exemple, sous la forme d'un circuit intégré spécifique ou ASIC (de l'anglais *application-specific integrated circuit*) ou sous la forme d'un composant logique programmable ou FPGA (de l'anglais *field-programmable gate array*).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé de capture d'images d'une zone d'intérêt d'un sujet en mouvement au sein d'un volume de capture **caractérisé en ce que** le procédé comporte les étapes suivantes :
- calcul répété à une première fréquence de la position en trois dimensions de la zone d'intérêt dans le volume de capture par capture du volume de capture par un système de caméra de contexte, et détection et localisation de la zone d'intérêt dans le volume de capture ;
- estimation à une fréquence, identique ou différente de la première fréquence, d'une trajectoire en trois dimensions de la zone d'intérêt dans le volume de capture à partir des positions calculées ;
- capture d'une série d'images de la zone d'intérêt par une caméra de capture à une seconde fréquence par estimation d'une position de la zone d'intérêt à au moins un instant t futur à partir de la trajectoire estimée en trois dimensions de la zone d'intérêt, pointage de la caméra de capture dans la direction de la position estimée de la zone d'intérêt à l'instant t, réglage de la mise au point de la caméra de capture sur la distance entre la caméra de capture et la position estimée de la zone d'intérêt à l'instant t additionnée d'un facteur de mise au point variant dans un intervalle centré sur zéro, et capture d'une image par la caméra de capture à l'instant t.

2. Procédé selon la revendication 1, **caractérisé en ce que** le système de caméra de contexte comporte deux caméras produisant des images stéréoscopiques.

3. Procédé selon la revendication 1 ou 2, **caractérisé en ce que** le système de caméra de contexte comporte une caméra en temps de vol.

4. Procédé selon l'une quelconque des revendications 1 à 3, **caractérisé en ce que** le facteur de mise au point évolue linéairement entre les valeurs extrêmes de l'intervalle centré sur zéro.

5. Procédé selon l'une quelconque des revendications 1 à 3, **caractérisé en ce que** le facteur de mise au point évolue de manière sinusoïdale entre les valeurs extrêmes de l'intervalle centré sur zéro.

6. Procédé selon l'une quelconque des revendications 1 à 3, **caractérisé en ce que** le facteur de mise au point évolue avec un pas d'incrément correspondant à la profondeur de champ entre les valeurs extrêmes de l'intervalle centré sur zéro.

7. Procédé selon l'une quelconque des revendications 1 à 6, **caractérisé en ce que** la trajectoire en trois dimensions de la zone d'intérêt est estimée linéairement à partir des deux dernières positions calculées.

8. Procédé selon l'une quelconque des revendications 1 à 7, **caractérisé en ce que** la trajectoire en trois dimensions de la zone d'intérêt est estimée à une fréquence supérieure à la première fréquence.

9. Programme d'ordinateur comprenant des instructions adaptées à la mise en oeuvre de chacune des étapes du procédé selon l'une quelconque des revendications 1 à 8 lorsque ledit programme est exécuté sur un ordinateur.

10. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 8.

11. Dispositif de capture d'images d'une zone d'intérêt d'un sujet en mouvement au sein d'un volume de capture **caractérisé en ce que** le dispositif comporte un processeur configuré pour les étapes suivantes :
- calcul répété à une première fréquence de la position en trois dimensions de la zone d'intérêt dans le volume de capture par capture du volume de capture par un système de caméra de contexte, et détection et localisation de la zone d'intérêt dans le volume de capture ;
- estimation à une fréquence, identique ou différente de la première fréquence, d'une trajectoire en trois dimensions de la zone d'intérêt dans le volume de capture à partir des positions calculées ;
- capture d'une série d'images de la zone d'intérêt par une caméra de capture à une seconde fréquence par estimation d'une position de la zone d'intérêt à au moins un instant t futur à partir de la trajectoire estimée en trois dimensions de la zone d'intérêt, pointage de la caméra de capture dans la direction de la position estimée de la zone d'intérêt à l'instant t, réglage de la mise au point de la caméra de capture sur la distance entre la caméra de capture et la position estimée de la zone d'intérêt à l'instant t additionnée d'un facteur de mise au point variant dans un intervalle centré sur zéro, et capture d'une image par la caméra de capture à l'instant t.
